# EUROPEAN PATENT SPECIFICATION

(11) **EP 3 034 599 B1**
(45) Date of publication and mention of the grant of the patent: **05.12.2018**
(21) Application number: 14836131.4
(22) Date of filing: 25.06.2014
(51) Int. Cl.: C12G 3/06, G01N 30/02, C07K 7/06, C07K 1/20, A23L 2/52, A23L 2/56, G01N 30/88, A23L 27/00

(54) **USE OF LIPOPEPTIDE COMPOUND FOR IMPROVING AROMA OF ALCOHOLIC BEVERAGES AND DETERMINATION METHOD THEREOF**
VERWENDUNG VON LIPOPEPTIDHALTIGER VERBINDUNG ZUR VERBESSERUNG DES AROMAS VON ALKOHOLISCHEN GETRÄNKEN UND BESTIMMUNGSVERFAHREN DAFÜR
UTILISATION D'UN COMPOSÉ LIPOPEPTIDIQUE POUR AMÉLIORER L'ARÔME DE BOISSONS ALCOOLISÉES ET PROCÉDÉ DE DOSAGE CORRESPONDANT

(30) Priority: 16.08.2013 CN 201310358602
(43) Date of publication of application: 22.06.2016
(73) Proprietor: Jiangnan University, Wuxi, Jiangsu 214122 (CN)
(72) Inventor: XU, Yan, Wuxi Jiangsu 214122 (CN); WU, Qun, Wuxi Jiangsu 214122 (CN)
(74) Representative: dompatent von Kreisler Selting Werner - Partnerschaft von Patent- und Rechtsanwälten mbB
(86) International application number: PCT/CN2014/080702
(87) International publication number: WO 2015/021823

(56) References cited:
- WO-A1-2009/156112
- CN-A- 101 240 014
- CN-A- 101 372 502
- CN-A- 102 105 070
- CN-A- 103 571 728
- KR-A- 20080 070 127
- US-A- 4 522 261

## Description

### CROSS-REFERENCES AND RELATED APPLICATIONS

This application claims the benefit of priority to Chinese Application No. 201310358602.X, entitled "Application of lipopeptides in improving the aroma of Chinese liquors and its quantification", filed August 16, 2013.

### BACKGROUND OF THE INVENTION

### Field of the Invention

The present invention belongs to the field of food. The present invention relates to the preparation and quantification of lipopeptides and its application in improving the aroma of alcoholic beverages, and more particularly relates to a method of alcoholic beverages production.

### Description of the Related Art

The matrix compounds in food affect its aroma and quality. The migratation of aroma from food to consumer's olfactory organ is affected by many factors, including the chemical interactions between food and aroma components, physical factors and physiological factors of consumers (chewing time, respiration). Due to the fact that the sense is an important factor in determining consumer preferences, it has important significance to research on how the aroma releases from the food and then acts with olfactory receptors. Currently, there are some classic researches, such as the β- lactoglobulin in milk, the β- cyclodextrin in colloid and the phenolic compounds in wine. However, little is known about the matrix compounds of liquors, especially Chinese liquors.

Currently, researches on the quality of alcoholic beverages focus on the identification and quantification of the aroma compounds. However, just the aroma compounds could not reflect the senses of liquors and the matrix compounds also determined the aroma quality of liquors. Now, Ultra-high performance liquid chromatography coupled with tandem mass spectrometry (UPLC-MS) is an important means to research on macromolecular matrix compounds. In addition, headspace solid phase micro extraction (HS-SPME) and gas chromatography-mass spectrometry (GC-MS) are important means to study the effects of macromolecular matrix compounds on aroma. Though there are many researches on volatile compounds of alcoholic beverages, rather little information has been reported about the nonvolatile macrocompounds.

Lipopeptide is one kind of important compounds produced by *Bacillus,* including surfactin, lichenysin, iturin, fengycin and so on. WO2009/156112A1 discloses cyclic lipopeptides with different stuctures. KR 2008 0070127 A discloses the use of lipopeptides to produce soy sauce. US 4 522 261 A discloses a composition comprising crude lichenysin extract and NaCl. Lipopeptide exhibits numerous pharmaceutical activities, including antimicrobial, antitumor, antiinflammatory. Surfactin is reported to be a potent surfactant, which could reduce the surface tension of water from 70mN / m to 36mN / m and the critical micelle concentration is 15.6mg / L. Iturin is reported as a strong antibiotics, which has strong inhibitory to yeast and mold. Fengycin is mold inhibitor, mainly is used for the inhibition of plant pathogenic fungi.

However, there is no relevant reports about application of lipopeptides (such as lichenysin) in improving the aroma of drinks, especially the aroma of alcoholic beverages.

### Detailed Description

The present inventors find that lipopeptides such as surfactin, lichenysin, iturins and fengycin play an important role in enhancing the quality of alcoholic beverages, especially the improvement of aroma.

The present invention provides a method for improving or enhancing the aroma of alcoholic beverages, including the addition of lichenysin to a total of 500-1500µg/L. Preferably, the total content of lichenysin after the addition was 600-1400µg / L, and more preferably 700-1300µg / L, 800-1200µg / L, 900-1100µg / L, and most preferably 950-1050µg / L, such as 1000µg / L. The content of lichenysin in alcoholic beverage could be quantified by the method described in the present invention.

The present invention also provides a method for lichenysin preparation, including separation and purification from Chinese liquor.

Specifically, the SPE C18 cartridge elluted alcoholic beverage was further purified by preparative chromatography to separate the lichenysin.

More specifically, chromatographic separation was carried out using an Xbridge Prep C18 (250 mm × 19 mm, 10 µm) reversed-phase column. The detection was selected at wavelength of 210 nm. Methanol solution containing 0.1% formic acid was the mobile phase A and methanol was mobile phase B. The separation program was : 0 to 10 min,40% B to 25% B; 10 to 50 min, 25% B to 5% B; 50 to 55 min, 5% B to 0% B.

The present invention also provides a method for quantification of lichenysin in alcoholic beverages. Said method couples the ultra-high performance liquid chromatography (UPLC) with mass spectrometry.

Specifically,
the UPLC parameters were as follows: the column was UPLC™ BEH C₁₈ column (100 mm×2.1 mm i.d., 1.7 µm); the column temperature was 30°C; the injection volume was 2 µL; the flow rate was 0.3mL / min; methanol solution containing 0.1% formic acid was the mobile phase A and methanol was mobile phase B. And the elution program was : 0 to 0.1 min, 15% B; 0.1 to 10 min, 0% B; 10 to 11 min, 15% B.

Mass selective detector (MSD) parameters were as follows: positive ion mode; atomizing air pressure, 30psi; separation voltage, 3.5 kV; collision induced voltage, 20V; gas for drying, N₂; temperature for drying, 100°C; ion scan range, 50-1500m / z.

Acquisition and analysis of datas were carried out by Masslynx 4.1 Mass Spectrometry software.

The present invention also provides a composition containing lichenysin and alcoholic beverages wherein the total content of said lichenysin is 500-1500µg/L. in particular, said composition is food, especially drinks.

The content of lichenysin in alcoholic beverage itself should be more preferably 600-1400µg / L, 700-1300µg / L, 800-1200µg / L, 900-1100µg / L, and particularly preferably 950-1050µg / L, such as 1000µg / L. The content of lichenysin in Chinese liquor could be quantified by the method described in the present invention.

The present invention also provides application of lichenysin in improving or enhancing the aroma of drinks.

The present invention also provides application of lichenysin in enhancing the volatility of aroma compounds and / or reducing the volatility of off-flavor compounds. Specifically, said aroma compounds were any one or more of esters, alcohols and aldehydes, and the said off-flavor compounds were phenolic compounds.

In one embodiment of the present invention, the headspace solidphase microextraction coupled with gas chromatography-mass spectrometry (HS-SPME-GC-MS) method was used to evaluated the effect of lipopeptides on volatile aroma compounds. Specifically, said method comprises:

8 mL of sample was added to a 20 mL headspace vial for HS-SPME extraction. For SPME, a 50/30 µm DVB/CAR/PDMS fiber was used. The sample was preheated at 20 - 30°C for 5 min and extracted for 30-50 min, and then desorbed by GC for 5min. For the GC analysis, a DB-Wax column (60 m × 0.325 mm × 0.25 µm) was used. The injector temperature was 250°C and the splitless mode was used. The conditions of GC were as follows: starting temperature 50°C (holding 2 min), then raised to 230°C at the rate of 6°C/min, and held at 230°C for 30 min; the column carrier gas was helium at a flow rate of 2 mL/min. The conditions of MS were as follows: the electron impact energy was 70 eV, and the ion source temperature was set at 230°C; full-scan acquisition was used in the ranges of masses (30-350 amu).

The present invention also provides a method of Chinese liquor production comprising addition of lichenysin to a total content of 500-1500µg/L, preferably 600-1400µg / L, 700-1300µg / L, 800-1200µg / L, 900-1100µg / L, and most preferably 950-1050µg / L, such as 1000µg / L. The content of lichenysin in alcoholic beverage could be quantified by the method described in the present invention.

Said lichenysin in the present invention is any one or more of the seven kinds of homologs (fraction (I) to fraction (VII)) :

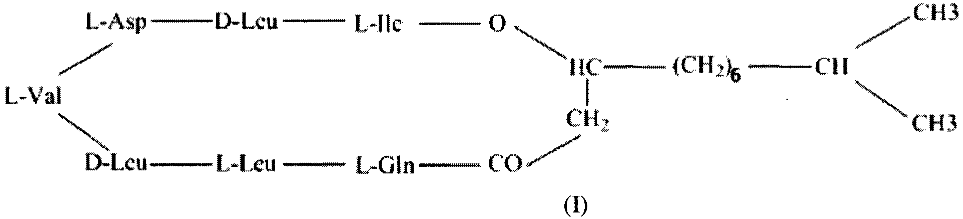

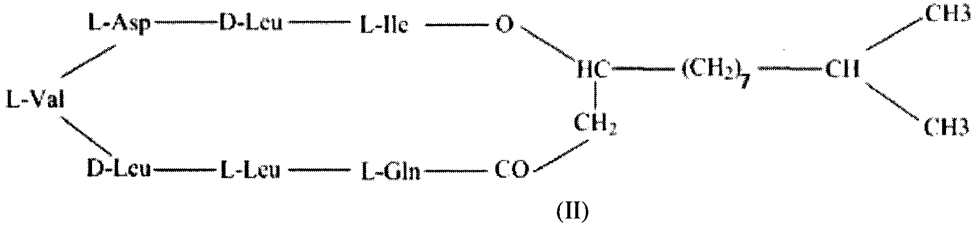

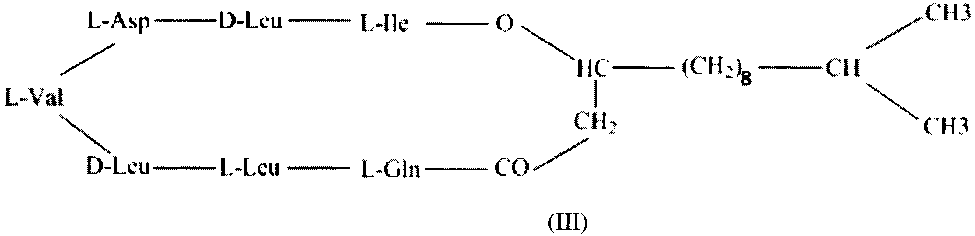

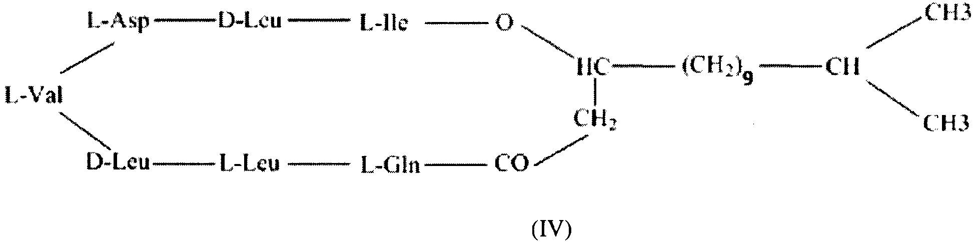

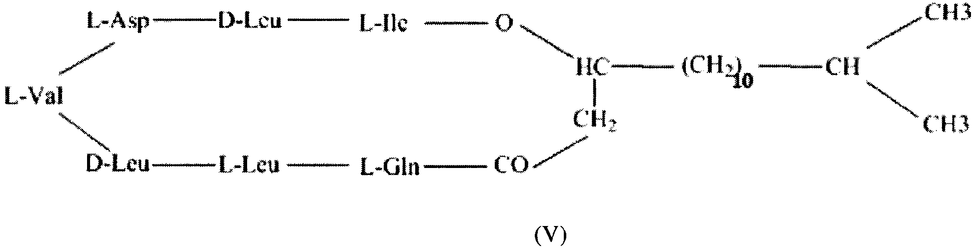

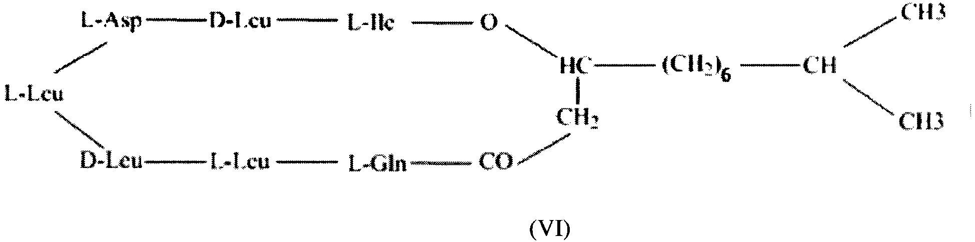

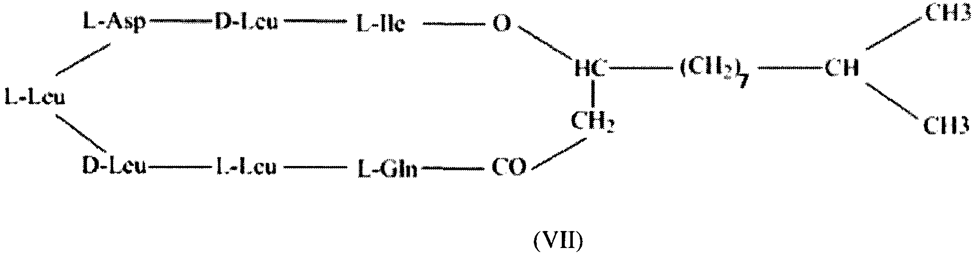

The mass-to-charge-ratio (*m*/*z*) of fraction (I) to fraction (VII) were 993, 1007, 1021, 1035, 1049, 1007 and 1021, respectivity.

Said flavor compounds in alcoholic beverages include aroma compounds and off-flavor compounds. Without otherwise specified, said aroma compounds were any one or more of esters, alcohols and acids, and said off-flavor compounds were phenolic compounds. In particular, said esters, alcohols, acids or phenolic compounds were compounds existed in Chinese liquor.

More specifically, the Chinese liquor was soy sauce aroma type liquor, strong aroma type liquor, light aroma type liquor, soybean-flavor type liquor or medical aroma type liquor.

The present invention evaluated the effect of lipopeptides (lichenysin) on aroma volatility in alcoholic beverages by HS-SPME. The results revealed that 20-30°C and 30-50 min were the optimized extraction temperature and extraction time, respectivity. Lipopeptides, especially lichenysin, have significant impacts on the volatility of aroma compounds of alcoholic beverages. Specifically, lipopeptides (lichenysin) mainly affected the esters, alcohols, acids and phenolic compounds of liquors.

### BRIEF DESCRIPTION OF DRAWINGS

Figure 1. Effect of extraction time on volatility of aroma compounds (esters, alcohols and acids) and off-flavor compounds (phenolic compounds).
Figure 2. Elution curve of separation and collection of lichenysin; Each peak corresponds to a kind of homolog.

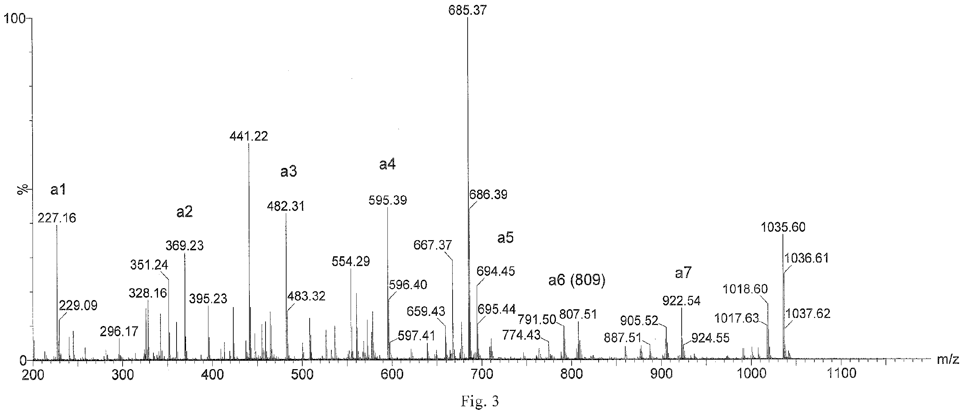

Figure 3. MS/MS spectrum of lichenysin (*m*/*z* : 1035.6).
Figure 4. ¹H NMR spectrum (A) and ¹³C NMR spectrum (B) of lichenysin (molecular weight: 1034.6).

### EXAMPLES

While the present invention has been described in some detail for purposes of clarity and understanding, one skilled in the art will appreciate that various changes in form and detail can be made without departing from the true scope of the invention. Conditions, which are not indicated in the present invention, could according to conventional conditions or conditions recommended by the manufacturer. The reagents or equipments without manufacturer specified are conventional products that can be obtained through commercially.

### Example 1. Sensory evaluation experiments of improving or enhancing the quality and flavor of Chinese liquor by lichenysin

### 1. Reagents and samples

Mixed lichenysin (mixture of fraction I to fraction VII) could be commercially obtained, or prepared according to the methods reported, or prepared according to the methods described in example 4 of present invention. The lichenysin used in the present example was prepared according to the method described in example 4 and it was a mixture of equal proportions of the seven homologues (fraction I to fraction VII).

Fraction V could be either commercially obtained or prepared according to the method reported in references: Yakimov, M.M.; Abrah am, W.-R.; Meyer, H.; Giuliano, L.; Golyshin, P.N., Structural characterization of lichenysin A components by fast atom bombardment tandem mass spectrometry. Biochimica et Biophysica Acta1999,1438(2),273-280.

Fraction VII could be either commercially obtained or prepared according to the methods reported in references: Yakimov, M.M.; Abrah am, W.-R.; Meyer, H.; Giuliano, L.; Golyshin, P.N., Structural characterization of lichenysin A components by fast atom bombardment tandem mass spectrometry. Biochimica et Biophysica Acta1999,1438(2),273-280.

Chinese liquor samples: *Langjiu* samples (the content of lichenysin in itself was 100 µg / L before adding extra lichenysin, and the lichenysin was added to a final content of 1000 µg / L).

### 2. Experiment method

(1) Mixed lichenysin, fraction V or fraction VII was added to liquor samples with an addition of 900 µg/L (to a final content of 1000 µg/L).
(2) Evaluation the differences by sensory evaluation experiments

Sensory evaluation experiments was as follows. The liquor samples were diluted to the same degree (such as 55 degrees, and samples less than 55 degrees could not be diluted) and then were tasted at room temperature and scored by 20 National Liquor judges. The overall score was 110 points, and the highest score for color, smell, taste, style and scent remaining on the glass were 10 points, 25 points, 50 points, 15 points, 10 points, respectivity. The strength of scent remaining on the glass was evaluated after inverted for 30 minutes.

### (3) Results

Datas were shown in Table 1.

**Table 1 Effects of lichenysin on sensory evaluation of liquors**

| | *Langjiu* sample | | | |
|---|---|---|---|---|
| | Blank (without lichenysin added) | Fraction V added | Fraction VII added | Mixed lichenysin added |
| Sensory evaluation (overall score was 110 points) | 84.8 | 88.0 | 87.5 | 88.5 |
| scent remaining on the glass (overall score was 10 points) | 7 | 10 | 10 | 10 |

Datas in Table 1 showed that the quality of Chinese liquor and scent remaining on the glass were improved significantly by adding lichenysin.

### Example 2. Optimization of SPME extraction conditions in model solutions

The volatility of aroma compounds (esters, alcohols and acids) and off-flavor compounds (phenolic compounds) in model solutions were evaluated by HS-SPME-GC-MS method.

HS-SPME conditions: 8 mL of sample was added to a 20 mL headspace vial for HS-SPME extraction. For SPME, a 50/30 µm DVB/CAR/PDMS fiber was used. The sample was preheated at 20 - 30°C for 5 min and extracted for 30-50 min, and then desorbed by GC for 5min.

GC conditions: a DB-Wax column (60 m × 0.325 mm × 0.25 µm) was used for the GC analysis. The injector temperature was 250°C and the splitless mode was used. The conditions of heating up programs were as follows: starting temperature 50°C (holding 2 min), then raised to 230°C at the rate of 6°C/min, and held at 230°C for 30 min. The column carrier gas was helium at a flow rate of 2 mL/min.

MS conditions: The electron impact energy was 70 eV, and the ion source temperature was set at 230°C. Full-scan acquisition was used in the ranges of masses (30-350 amu).

According to the peak area of volatile compounds, 20-30°C and 30-50min were the optimized extraction temperature and extraction time, respectivity.

### Example 3. Effect of lichenysin on the volatility of aroma compounds in Chinese liquors

### 1. Reagents and samples

Mixed lichenysin (mixture of fraction I to fraction VII) : the same as example 1.
Fraction V : the same as example 1.
Fraction VII: the same as example 1.
Chinese liquor samples: *Langjiu* liquor (soy sauce aroma type liquor), strong aroma type liquor, and light aroma type liquor.

### 2. Experiment method

(1) Mixed lichenysin, fraction V or fraction VII was added to liquor samples with an addition of 100 µg/L.
(2) Evaluation and analysis of the effect on liquors was carried out by the method described in Example 2.

### 3. Resultes

Results were shown in Table 2. The blank control was the liquor without any addition of lichenysin.

**Table 2 Effect of lichenysin on the volatility of aroma compounds and off-flavor compounds in liquors**

| | Sample 1 | | | Sample 2 | | | Sample 3 | | |
|---|---|---|---|---|---|---|---|---|---|
| | Blank control | Fraction V added | Net change | Blank control | Fraction VII added | Net change | Blank control | Mixed lichenysin added | Net change |
| esters | 59173 | 68394 | 15.58% | 153321 | 175827 | 14.68% | 218884 | 242003 | 10.56% |
| alcohols | 1845522 | 1892688 | 2.56% | 2360905 | 2405441 | 1.89% | 2277122 | 2242713 | 1.51% |
| acids | 366963 | 182724 | 50.21% | 5256621 | 4656515 | 11.42% | N.D. | N.D. | - |
| phenolic compounds | 32980 | 13629 | 58.67% | 3457 | 1798 | 47.98% | 14993 | 5302 | 64.64% |

Results shown in Table 2 indicated that the volatility of aroma compounds (such as esters, alcohols and acids) and off-flavor compounds (phenolic compounds) were significantly affected by lichenysin. Lichenysin could efficiently suppress the volatility of phenolic compounds and enhance the volatility of esters, alcohols and acids. In addition, the volatility of phenolic off-flavors was significantly deduced by addition of lichenysin with a reduction amount 50% -70%.

### Example 4. Effect of lichenysin on the volatility of aroma compounds in wine or beer

### 1. Reagents and samples

Lichenysin shown in formula VII: the same as example 1.
Mixed lichenysin (mixture of fraction I to fraction VII) : the same as example 1.
Fraction V : the same as example 1.
Fraction VII: the same as example 1.
Liquor samples: wine and beer

### 2. Experiment method

(1) Mixed lichenysin, fraction V or fraction VII was added to liquor samples with an addition of 100 µg/L.
(2) Evaluation and analysis of the effect on liquors was carried out by the method described in Example 2.

### 3. Resultes

Results were shown in Table 3. The blank control was the sample without any addition of lichenysin.

**Table 3 Effect of lichenysin on the volatility of typical off-flavor compounds in wine or beer**

| Compound | conc. (µg/L) | odor descriptor | source | Blank control | Samples with lichenysin added | Net change |
|---|---|---|---|---|---|---|
| 4-Ethylphenol | 440 | Phenolic off-flavor | in wine | 218681.77 | 146110.58 | 33.19% |
| 4-Ethylguaiacol | 135 | Phenolic off-flavor | in wine | 236798.33 | 112161.9767 | 52.63% |
| trans-2-nonenal | 20,000 | orris, fat and cucumber | in beer | 200870.26 | 96688.35 | 51.87% |
| Diacetyl | 100,000 | buttery | in beer | 104482.04 | 48527.12333 | 53.55% |
| Linoleic Acid | 100,000 | fatty | in beer | 275077.94 | 126608.9733 | 53.97% |

### Example 5. Separation and purification of lipopeptides (lichenysin) in Chinese iquor

### 1. Instruments and equipments for experiment

SPE C18 column (Waters) was used for the purification of lipopeptides in Chinese iquor, and equipments for extraction were Waters 2767 Sample Manager, Waters 2489 UV/visible Detector and Waters 2535 Quaternary Gradient Module.

Waters Acquity UPLC and Synapt Q-TOF system were used for mass spectrometry (MS) identification of lichenysin.

### 2. Experiment method and steps

### (1) Separation and purification of lipopeptides in Chinese iquor

Though there were many researches on volatile compounds of Chinese liquor, rather little information had been reported about the nonvolatile macrocompounds. The samples eluted by SPE C18 column were further purified by preparative chromatography.

Soy sauce aroma type liquor (*Langjiu* liquor) eluted by SPE C18 column was further purified by preparative chromatography. An Xbridge Prep C18 (250 mm × 19 mm, 10 µm) reversed-phase column was used and the detection was selected at wavelength of 210 nm. Methanol solution containing 0.1% formic acid was the mobile phase A and methanol was mobile phase B. The separate program was : 0 to 10 min,40% B to 25% B; 10 to 50 min, 25% B to 5% B; 50 to 55 min, 5% B to 0% B. Pure product was obtained after concentrated by evaporation.

### (2) Identification of the structures

Mass selective detector (MSD) parameters were as follows: positive ion mode; atomizing air pressure, 30psi; separation voltage, 3.5 kV; collision induced voltage, 20V; gas for drying, N₂; temperature for drying, 100°C; ion scan range, 50-1500m / z. Acquisition and analysis of datas were carried out by Masslynx 4.1 Mass Spectrometry software.

### (2) Results

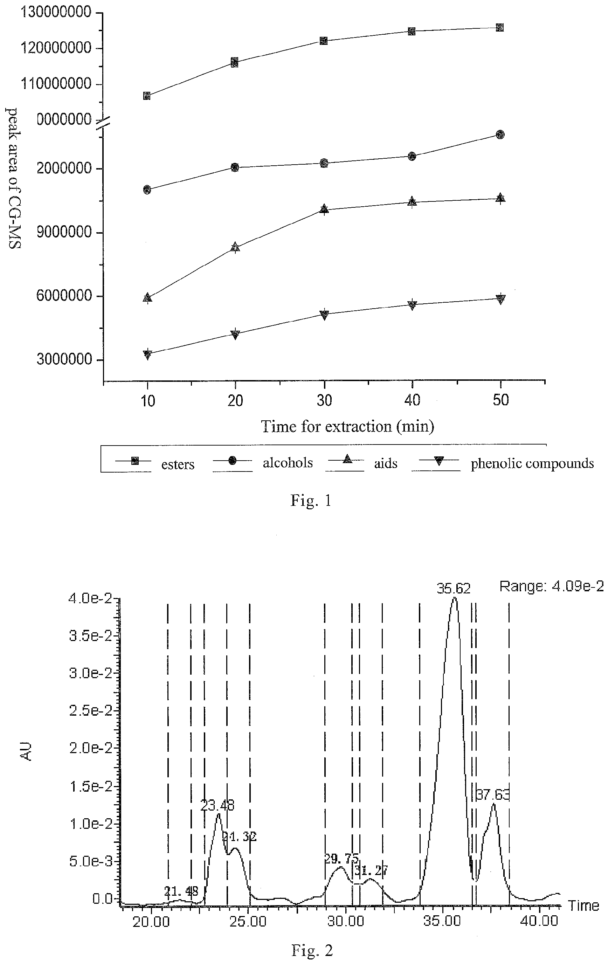

Lichenysin was separated, extracted and purified from Chinese liquor, and surfactin, iturin and fengycin could also be extracted. In addition,, seven homologs were contained in lichenysin product. Datas in Figure 2 showed that seven pure homologs with different structures were obtained. The molecular weight, the M⁺, the main fragments and chromatographic purity were exhibited in Table 4.

**Table 4 MS and purity results of lichenysin**

| Molecular weight | M⁺ (m/z) | MS/MS main fragments | Purity (100%) 210 nm |
|---|---|---|---|
| 992.6 | 993.6 | 671.4 | 83.7 |
| 1006.6 | 1007.6 | 685.4 | 94.8 |
| 1006.6 | 1007.6 | 671.4 | 40.6 |
| 1020.6 | 1021.6 | 685.4 | 87.3 |
| 1020.6 | 1021.6 | 671.4 | 95.3 |
| 1034.6 | 1035.6 | 685.4 | 100 |
| 1048.6 | 1049.6 | 685.4 | 85.8 |

### Example 6. MS identification of lipopeptides (lichenysin) from Chinese liquor

To confirm the proposed structure of the fractions (I to VII), MS and NMR measurements were used. And the isolated compound with a *m*/*z* 1035.6 (685.4) was analyzed by quadrupole-time-of-flight mass spectrometer (Q-TOF-MS).

### 1. Instruments and equipments for experiment

Waters Acquity UPLC and Synapt Q-TOF system were used for mass spectrometry (MS) identification of lipopeptides from Chinses liquor.

### 2. Experiment method and steps

Detection was carried out by UPLC coupling with MS. The column was UPLC™ BEH C₁₈ column (100 mm×2.1 mm i.d., 1.7 µm); the column temperature was 30°C; the injection volume was 2 µL; the flow rate was 0.3mL / min. Methanol solution containing 0.1% formic acid was the mobile phase A and methanol was mobile phase B. And the elution program was : 0 to 0.1 min, 15% B; 0.1 to 10 min, 0% B; 10 to 11 min, 15% B. Mass selective detector (MSD) parameters were as follows: positive ion mode; atomizing air pressure, 30psi; separation voltage, 3.5 kV; collision induced voltage, 20V; gas for drying, N₂; temperature for drying, 100°C; ion scan range, 50-1500m / z.

### 3. Results

The structure of amino acid moiety was basically consistent with the lichenysin reported, and the amino acid moiety was *N*'-Gln-Leu-Leu-Val-Asp-Leu-Ile-*C*' and the fatty acid moiety was C₁₅ - fatty acid.

The datas of other six fractions were similar.

### Example 7. NMR identification of lipopeptides from Chinese liquor

### 1. Instruments and equipments for experiment

NMR spectrometer (Bruker AM 600).

### 2. Experiment method and steps

NMR spectrometer (Bruker AM 600) was used for analysis the ¹H and ¹³C NMR spectrum. The solvent was deuterated methanol and the experimental temperature was 323K.

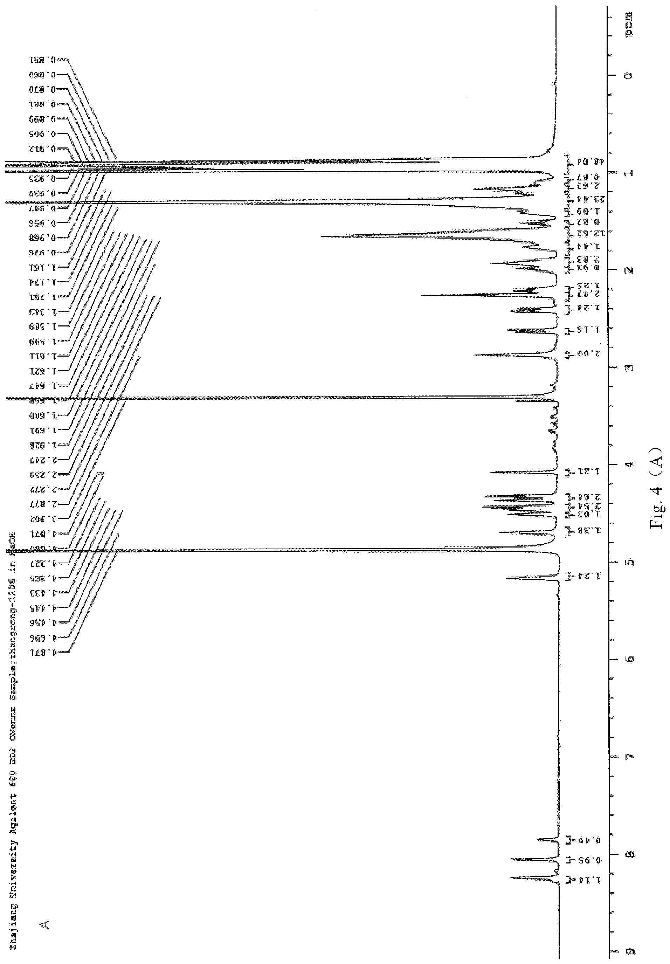

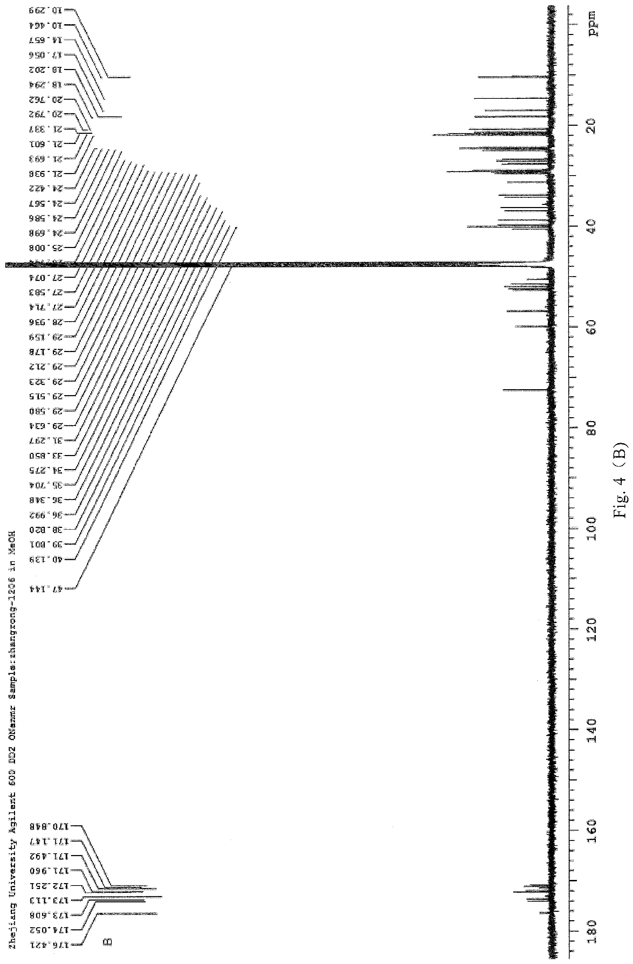

Results were shown in Figure 4, Table 5 and Table 6.

**Table 5 Chemical shift of ¹H NMR spectrum of lichenysin (molecular weight 1034.6)**

| | Gln | Leu | Leu | Val | Asp | Leu | Ile | 3-HFA |
|---|---|---|---|---|---|---|---|---|
| NH | | | 7.847 | | 8.17 | | | |
| H-2 | 4.706 | 4.433 | 4.365 | 4.328 | 5.164 | 4.512 | 4.456 | 4.08 |
| H-3 | 2.272 | 1.928 | 2.01 | 2.43 | 2.635 | 2.214 | 2.618 | 2.877 |
| 4-CH₂ | 1.647 (multi-spectrum) | | | | | | | |
| 5-CH₂ | | | | | | | | 1.291 (multi-spectrum) |
| CH₃ | 0.816-0.968 (multi-spectrum) | | | | | | | |

**Table 6 Chemical shift of ¹C NMR spectrum of lichenysin (molecular weight 1034.6)**

| | Gln | Leu | Leu | Val | Asp | Leu | Ile | 3-HFA |
|---|---|---|---|---|---|---|---|---|
| C=O | 172.255 | 173.113 | 171.963 | 170.844 | 171.496 | 173.604 | 171.143 | 172.255 |
| C=O-NH₂ | 176.424 | | | | 174.048 | | | |
| NHCH | 52.46 | 50.574 | 52.023 | 59.948 | 51.54 | 52.736 | 56.898 | 72.573 |
| 3-CH₂ | 33.849 | 38.816 | 39.805 | 31.297 | 36.992 | 40.135 | 36.348 | 40.633 |
| 4-CH₂ | 24.442-29.634 (multi-spectrum) | | | | | | | |
| CH₃ | 10.464-21.938 (multi-spectrum) | | | | | | | |

Figure 4(A) indicated that the compound had chemical shifts of 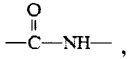 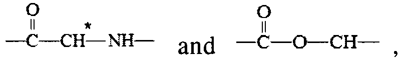 which were important functional groups of the cyclicpeptides. In addition, there were 7 chemical shifts of 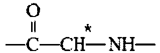 and one chemical shift of 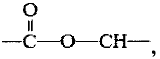 and the 7 amino acids and the hydroxy fatty acid formed a cyclicpeptide. Information in ¹H NMR spectrum was incomplete, which could not fully reflect the structural information of the compound.

Figure 4(B) indicated that the compound had corresponding chemical shifts of 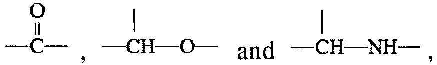 which were important functional groups of the cyclicpeptides. In addition, there were 7 chemical shifts of 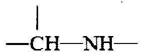 and one chemical shift of 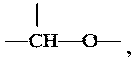 and the 7 amino acids and the hydroxy fatty acid formed a cyclicpeptide. These confirmed that the cyclicpeptide was surely formed by 7 amino acids and a hydroxy fatty acid. The structural information of the compound was basically reflected in Table 6.

Datas indicated that the molecular formula of the lichenysin (molecular weight 1034.6) was as follows:

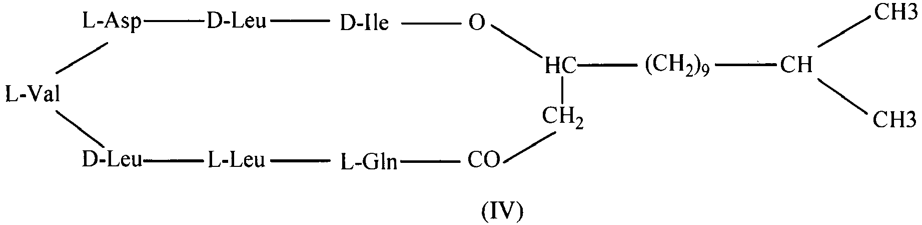

The structure of other six fractions were similar.

### Example 8. Determination of the structure of lipopeptides from Chinese liquor

Analysis and comparation of datas from ¹H and ¹³C NMR experiments conformed that the volatile macrocompounds were lipopeptides, including surfactin, lichenysin, iturin and fengycin.

### Example 9. Quantification of lichenysin in Chinese liquors

### 1. Instruments and equipments for experiment

The quantification of lichenysin in Chinese liquors was carried out by Waters Acquity UPLC and Synapt Q-TOF system.

### 2. Experiment method and steps

Quantification was carried out by coupling the ultra-high performance liquid chromatography (UPLC) with mass spectrometry.

The UPLC parameters were as follows: the column of chromatography was UPLC™ BEH C₁₈ column (100 mm×2.1 mm i.d., 1.7 µm); the column temperature was 30°C; the injection volume was 2 µL; the flow rate was 0.3mL / min. Methanol solution containing 0.1% formic acid was the mobile phase A and methanol was mobile phase B. And the elution program was : 0 to 0.1 min, 15% B; 0.1 to 10 min, 0% B; 10 to 11 min, 15% B.

Mass selective detector (MSD) parameters were as follows: positive ion mode; atomizing air pressure, 30psi; separation voltage, 3.5 kV; collision induced voltage, 20V; gas for drying, N₂; temperature for drying, 100°C; ion scan range, 50-1500m / z.

The content of lichenysin in liquors could be calculated through the standard curves of Table 7.

### 3. Results were shown in Table 7 and Table 8.

**Table 7 Standard curves of lichenysins from Chinese liquors (LC-MS / MS)**

| Molecular weight | M⁺ (m/z) | MS/MS main fragments | Slope | Intercept | *R²* | n | Linear range (µg/L) |
|---|---|---|---|---|---|---|---|
| 992.6 | 993.6 | 671.4 | 0.155 | -66.84 | 0.999 | 4 | 17.5-17500 |
| 1006.6 | 1007.6 | 685.4 | 1.392 | 64.6 | 0.999 | 4 | 65-65000 |
| 1006.6 | 1007.6 | 671.4 | 25.07 | -157.5 | 0.999 | 3 | 150-15000 |
| 1020.6 | 1021.6 | 685.4 | 4.578 | -133.3 | 0.999 | 4 | 47.5-47500 |
| 1020.6 | 1021.6 | 671.4 | 3.336 | -86.18 | 0.999 | 4 | 35-35000 |
| 1034.6 | 1035.6 | 685.4 | 2.784 | -582.9 | 0.997 | 5 | 16-160000 |
| 1048.6 | 1049.6 | 685.4 | 1.913 | -5.37 | 0.999 | 3 | 75-7500 |

**Table 8 Contents of lichenysins (µg / L) in several main types of Chinese liquors (LC-MS / MS)**

| Molecular weight | M⁺ (m/z) | MS/MS main fragments | Medical aroma type | Soybean-flavor type | Strong aroma type | Light aroma type | Soy sauce aroma type |
|---|---|---|---|---|---|---|---|
| 1006.6 | 1007.6 | 685.4 | 42.42 | 0.74 | 1.84 | 2.62 | 1.64 |
| 1006.6 | 1007.6 | 671.4 | 929.69 | 12.50 | 64.39 | 36.82 | 128.57 |
| 1020.6 | 1021.6 | 685.4 | 305.97 | 5.01 | 22.50 | 21.49 | 48.27 |
| 1020.6 | 1021.6 | 671.4 | 143.98 | 2.22 | 8.14 | 7.09 | 11.86 |
| 1034.6 | 1035.6 | 685.4 | 399.75 | 1.60 | 15.72 | 31.69 | 33.68 |
| 1048.6 | 1049.6 | 685.4 | 16.68 | 0.33 | 1.21 | 0.63 | 0.38 |
| ∑ | | | 1838.4 | 22.39 | 113.81 | 100.34 | 224.41 |

Results in Table 7 showed that the limit of detection was 1 µg / L. It can be concluded that the method in present invention significantly improved the detection sensitivity of lichenysins, while the detectable concentration was more than 10 mg/L by diode array detection means.

Datas in Table 8 showed that the content of lichenysins in Chinese liquors was between 10 µg/L and 1000µg/L, but the contents were significantly different between samples.

The results also showed that a high sensitivity method for the quantification of lichenysin in Chinese liquors was constructed (LC-MS / MS).

## Claims

1. A method for improving or enhancing the aroma of alcoholic beverages, including the addition of lichenysin to a total content of 500-1500µg / L;
said lichenysin is any one or more of the seven homologs (fraction (I) to fraction (VII)):

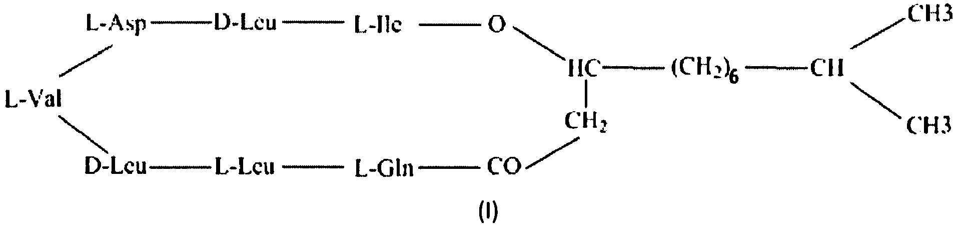

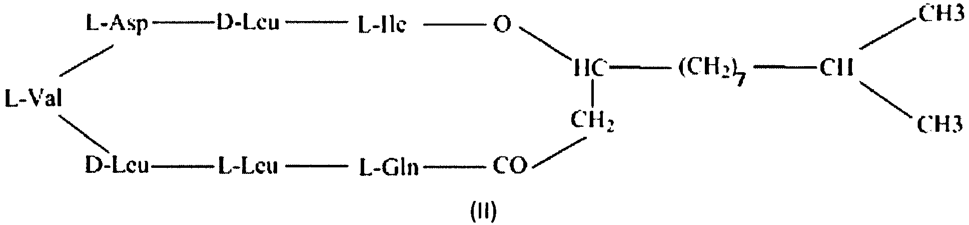

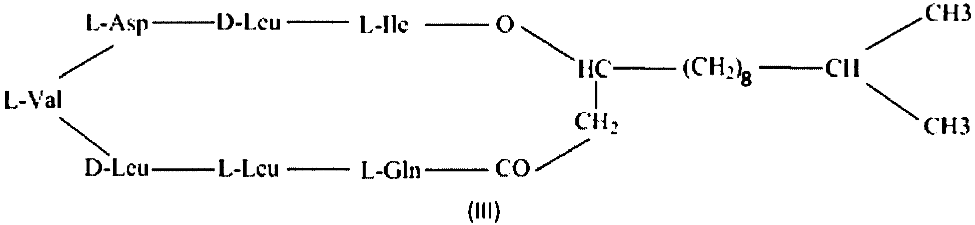

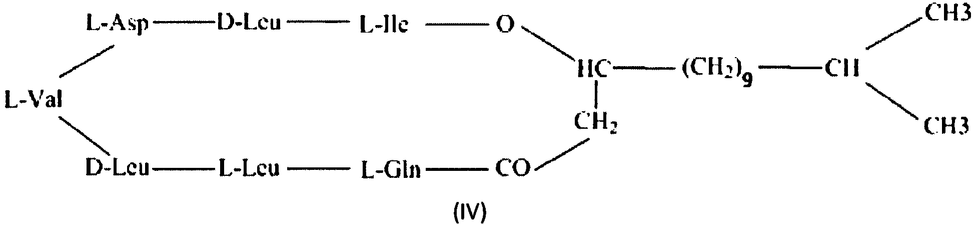

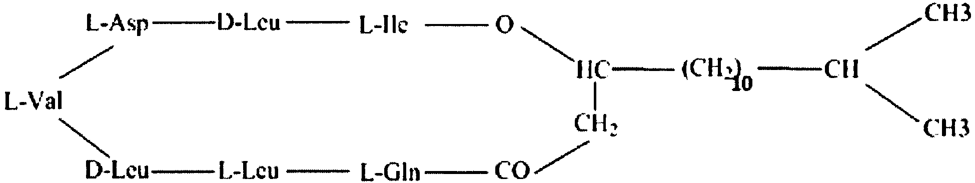

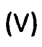

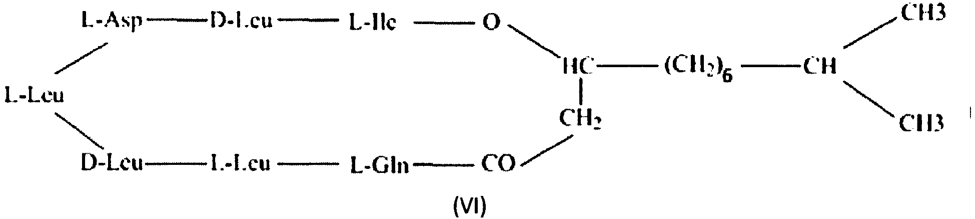

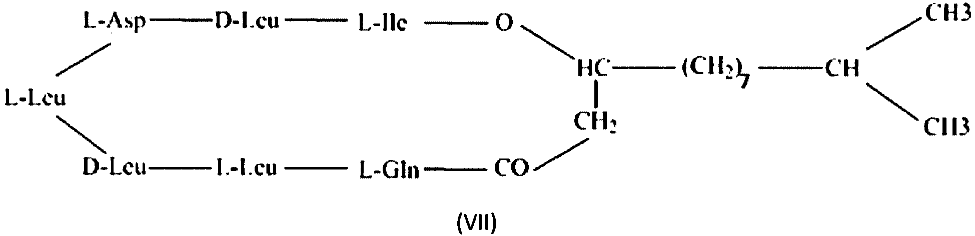

2. The method of claim 1, wherein said method is to enhance the volatility of aroma compounds or to reduce the volatility of off-flavor compounds.

3. The method of claim 2, wherein said aroma compounds are any one or more of esters, alcohols and aldehydes, and the said off-flavor compounds are phenolic compounds.

4. A method of Chinese liquor production, comprising addition of lichenysin to a total content of 500-1500µg / L;
said lichenysin is any one or more of the seven homologs (fraction (I) to fraction (VII)):

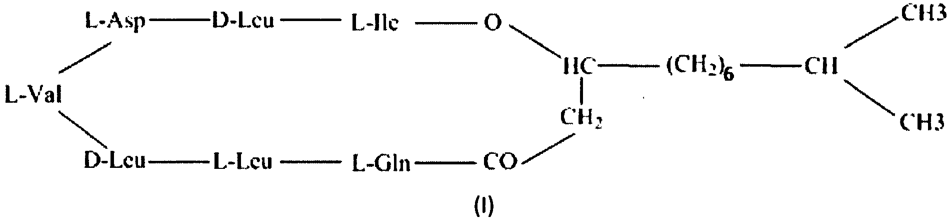

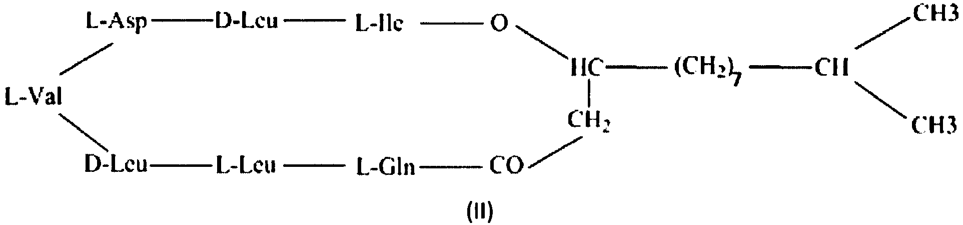

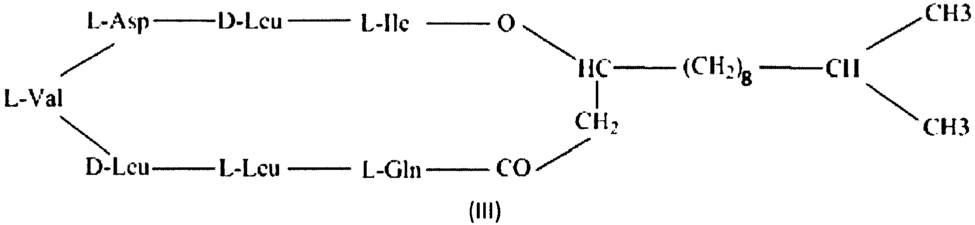

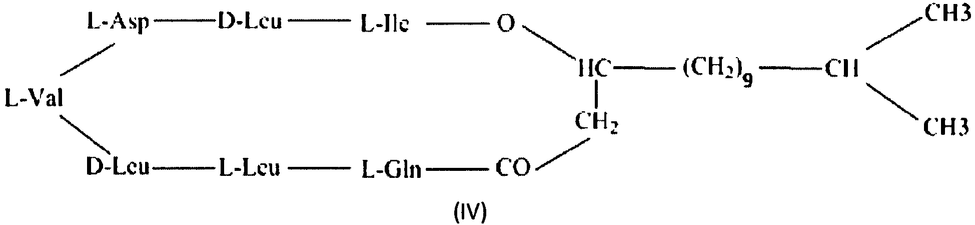

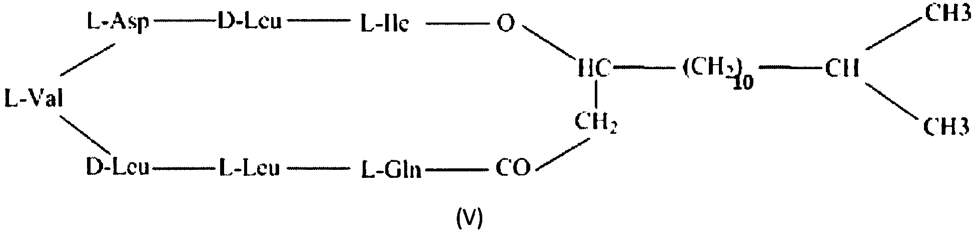

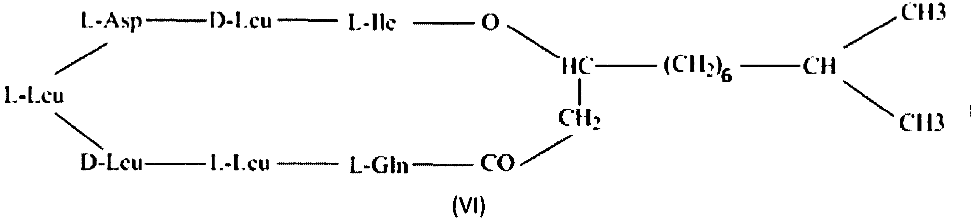

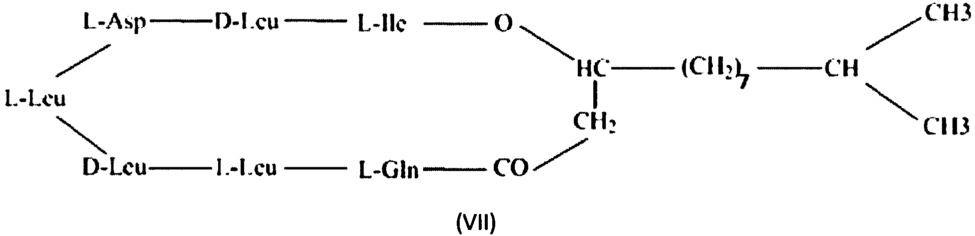

5. The method of claim 4, wherein said lichenysin is prepared by separation and purification from Chinese liquor.

6. The method according to claim 5 wherein the Chinese liquor is eluted by a SPE C18 column and is further purified by preparative chromatography to separate the lichenysin.

7. The method according to claim 6 wherein the Chromatographic separation is carried out by an Xbridge Prep C18 (250 mm ×19 mm, 10 µm) reversed-phase column; the detection is selected at wavelength of 210 nm; methanol solution containing 0.1% formic acid is the mobile phase A and methanol is mobile phase B; the separate program was: 0 to 10 min,40% B to 25% B; 10 to 50 min, 25% B to 5% B; 50 to 55 min, 5% B to 0%B.

8. The method of claim 4, wherein said lichenysin in Chinese liquor are quantified by the ultra-high performance liquid chromatography (UPLC) with mass spectrometry.

9. The method of claim 8 wherein,
the UPLC parameters are as follows: the column is UPLC™ BEH C₁₈ column (100 mm×2.1 mm i.d., 1.7 µm); the column temperature is 30°C; the injection volume is 2 µL; the flow rate was 0.3mL / min; Methanol solution containing 0.1% formic acid is the mobile phase A and methanol is mobile phase B; and the elution program is: 0 to 0.1 min, 15% B; 0.1 to 10 min, 0% B; 10 to 11 min, 15% B; and
mass selective detector (MSD) parameters are as follows: positive ion mode; atomizing air pressure, 30psi; separation voltage, 3.5 kV; collision induced voltage, 20V; gas for drying,
N₂; temperature for drying, 100°C; ion scan range, 50-1500m / z.

10. A composition, containing
a) lichenysin; and
b) alcoholic beverage,
wherein the total content of said lichenysin is 500-1500µg / L, and-
said lichenysin is any one or more of the seven homologs (fraction (I) to fraction (VII)) :

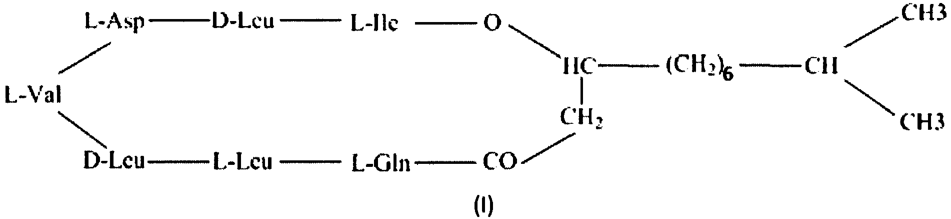

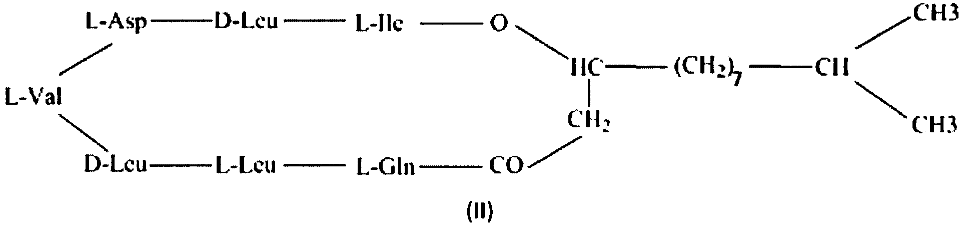

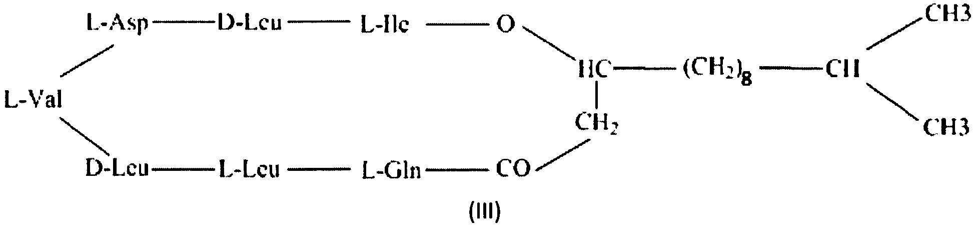

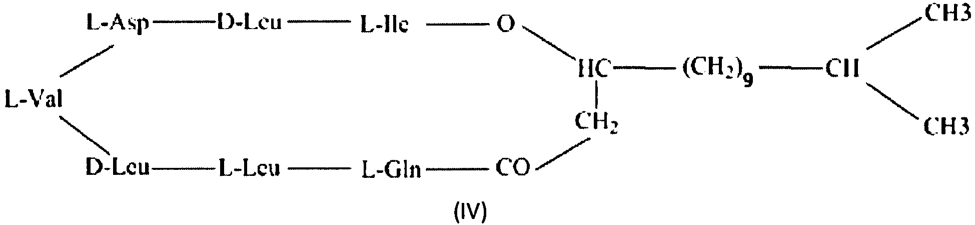

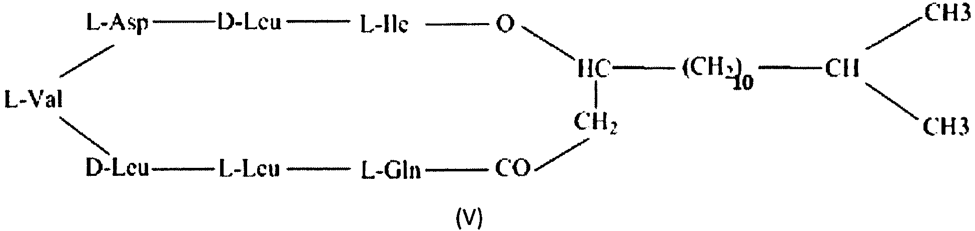

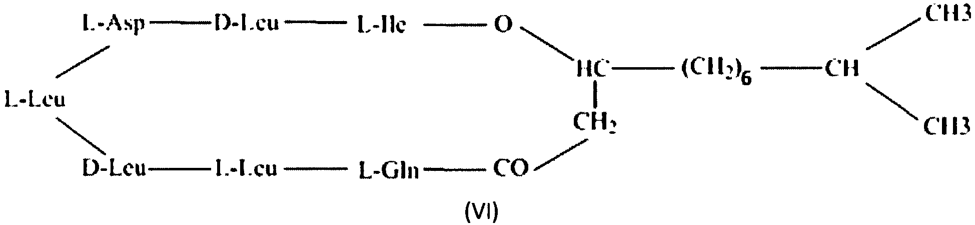

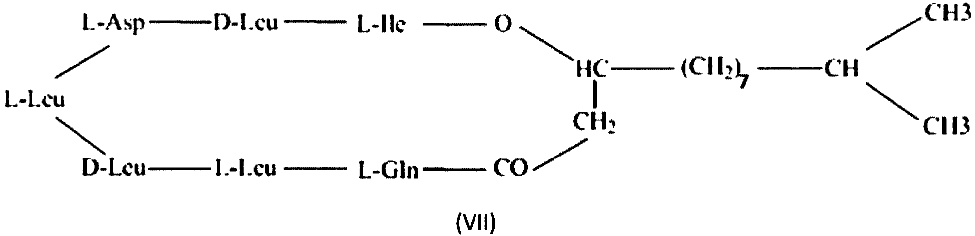

11. A composition according to claim 10 wherein the composition is food.

12. A composition according to claim 11 wherein the food is a drink.

## Patentansprüche

1. Verfahren zur Verbesserung oder Verstärkung des Aromas von alkoholischen Getränken, umfassend die Zugabe von Lichenysin bis zu einem Gesamtgehalt von 500-1500 µg/l;
wobei es sich bei dem Lichenysin um eines oder mehrere der sieben Homologe (Fraktion (I) bis Fraktion (VII)) handelt:

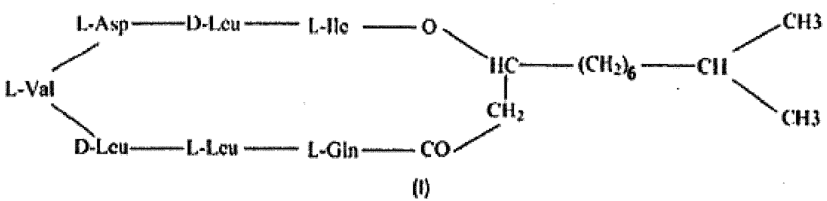

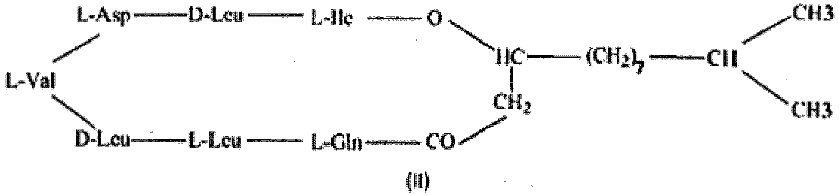

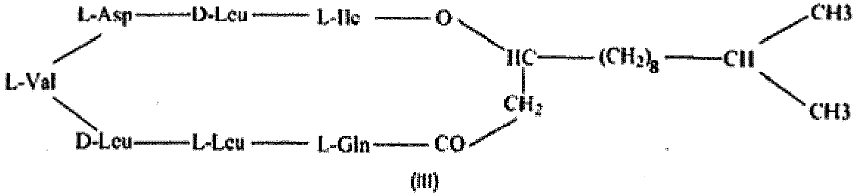

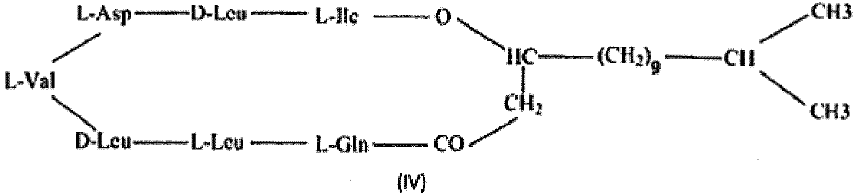

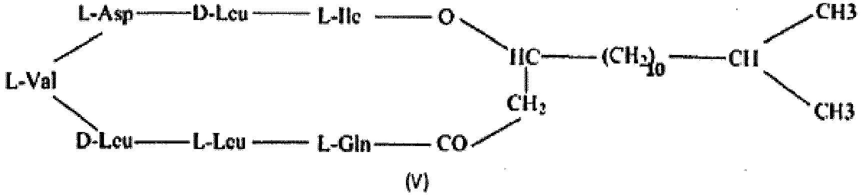

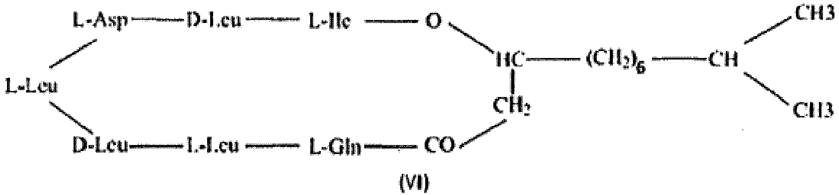

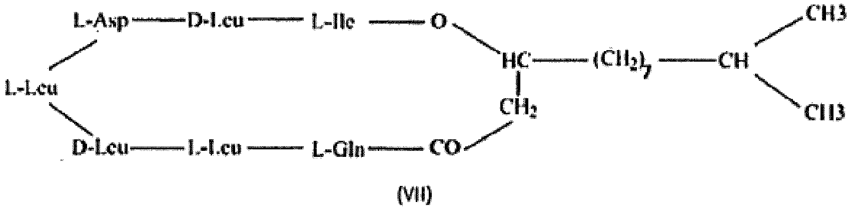

2. Verfahren gemäß Anspruch 1, wobei das Verfahren darin besteht, die Flüchtigkeit von Aromaverbindungen zu verstärken oder die Flüchtigkeit von Fehlaromaverbindungen zu reduzieren.

3. Verfahren gemäß Anspruch 2, wobei es sich bei den Aromaverbindungen um einen oder mehrere Ester, Alkohole und Aldehyde handelt und die Fehlaromaverbindungen phenolische Verbindungen sind.

4. Verfahren zur Herstellung von chinesischem Schnaps, umfassend die Zugabe von Lichenysin bis zu einem Gesamtgehalt von 500-1500 µg/l;
wobei es sich bei dem Lichenysin um eines oder mehrere der sieben Homologe (Fraktion (I) bis Fraktion (VII)) handelt:

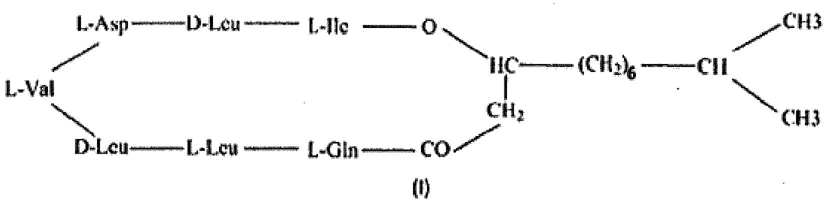

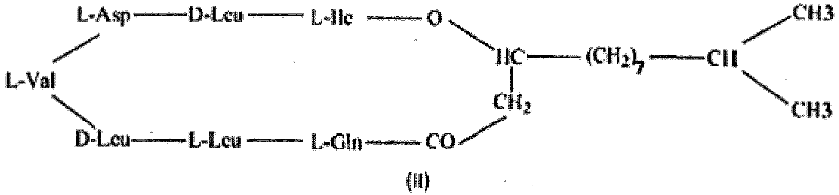

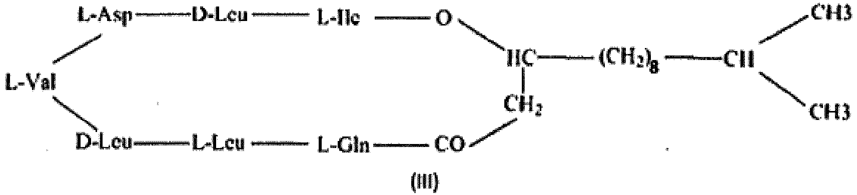

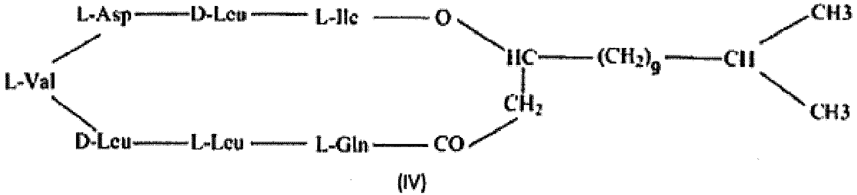

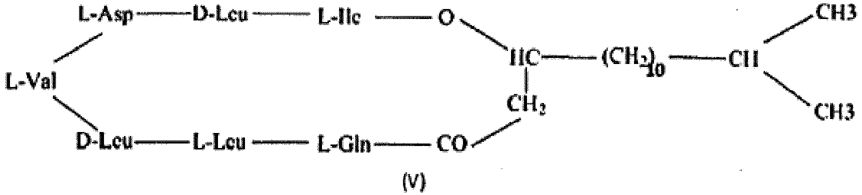

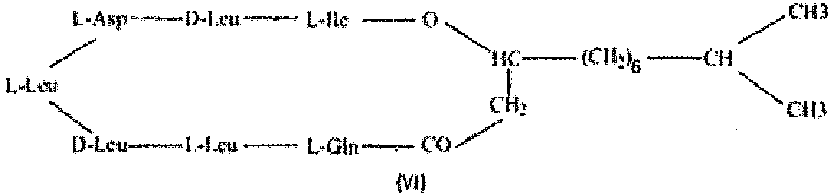

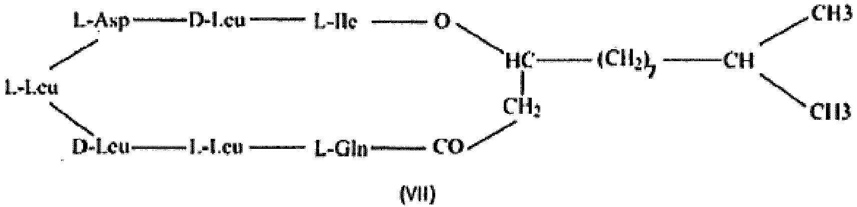

5. Verfahren gemäß Anspruch 4, wobei das Lichenysin durch Abtrennung und Reinigung aus chinesischem Schnaps hergestellt ist.

6. Verfahren gemäß Anspruch 5, wobei der chinesische Schnaps über eine SPE-C18-Säule eluiert wird und weiterhin durch präparative Chromatographie gereinigt wird, um das Lichenysin abzutrennen.

7. Verfahren gemäß Anspruch 6, wobei die chromatographische Trennung über eine Umkehrphasensäule des Typs Xbridge Prep C18 (250 mm x 19 mm, 10 µm) durchgeführt wird, der Nachweis bei einer Wellenlänge von 210 nm ausgewählt wird, eine Methanollösung, die 0,1% Ameisensäure enthält, die mobile Phase A ist und Methanol die mobile Phase B ist, das Trennungsprogramm wie folgt war: 0 bis 10 min: 40% B bis 25% B; 10 bis 50 min: 25% B bis 5% B; 50 bis 55 min: 5% B bis 0% B.

8. Verfahren gemäß Anspruch 4, wobei das Lichenysin im chinesischen Schnaps durch Ultrahochleistungsflüssigchromatographie (UPLC) mit Massenspektrometrie quantifiziert wird.

9. Verfahren gemäß Anspruch 8, wobei
die UPLC-Parameter wie folgt sind: die Säule ist eine UPLC™-BEH-C₁₈-Säule (100 mm x 2,1 mm ID, 1,7 µm), die Säulentemperatur beträgt 30 °C, das Injektionsvolumen beträgt 2 µl, die Fließgeschwindigkeit betrug 0,3 ml/min, eine Methanollösung, die 0,1% Ameisensäure enthält, ist die mobile Phase A, und Methanol ist die mobile Phase B, und das Elutionsprogramm ist: 0 bis 0,1 min: 15% B; 0,1 bis 10 min: 0% B; 10 bis 11 min: 15% B; und
die Parameter des massenselektiven Detektors (MSD) wie folgt sind: Modus positive Ionen, Zerstäubungsluftdruck: 30 psi; Trennungsspannung: 3,5kV; kollisionsinduzierte Spannung: 20 V; Gas zum Trocknen: N₂; Temperatur zum Trocknen: 100°C; Ionenabtastbereich: 50-1500 m/z.

10. Zusammensetzung, enthaltend
a) Lichenysin; und
b) ein alkoholisches Getränk;
wobei der Gesamtgehalt des Lichenysins 500-1500 µg/l beträgt und
es sich bei dem Lichenysin um eines oder mehrere der sieben Homologe (Fraktion (I) bis Fraktion (VII)) handelt:

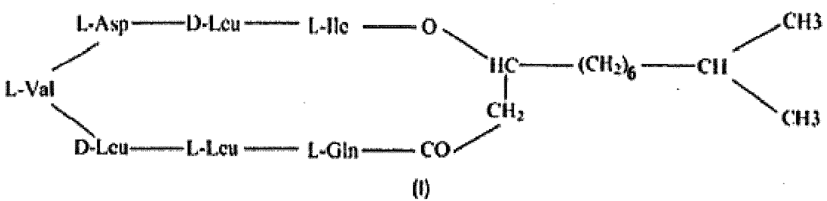

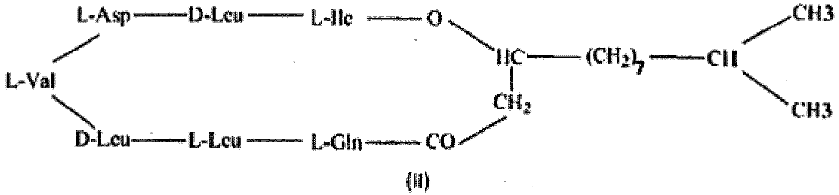

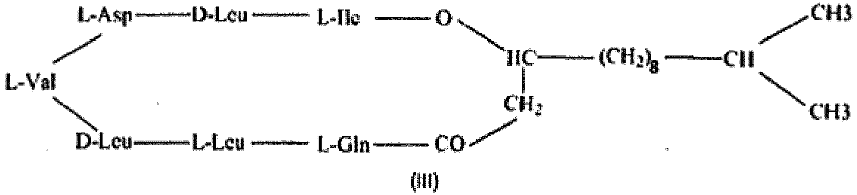

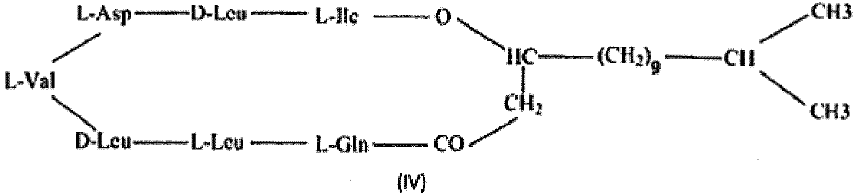

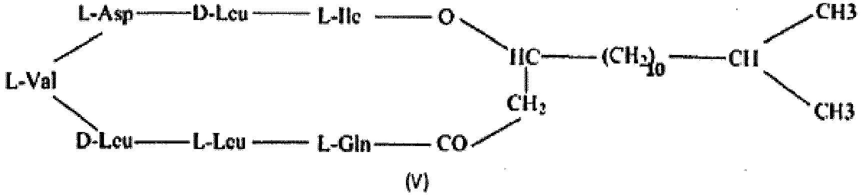

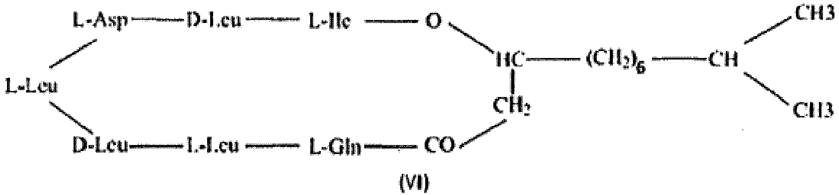

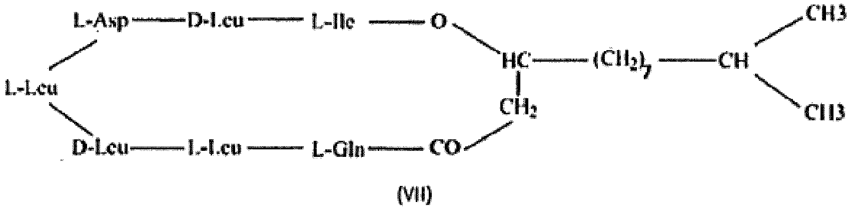

11. Zusammensetzung gemäß Anspruch 10, wobei es sich bei der Zusammensetzung um ein Lebensmittel handelt.

12. Zusammensetzung gemäß Anspruch 11, wobei es sich bei dem Lebensmittel um ein Getränk handelt.

## Revendications

1. Procédé pour améliorer ou renforcer l'arôme de boissons alcooliques, comprenant l'ajout de lichenysine jusqu'à une teneur totale de 500-1500 µg/l,
ladite lichenysine étant l'une ou plusieurs des sept homologues (fraction (I) à fraction (VII)) :

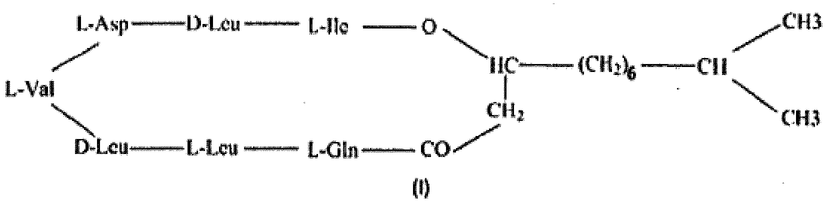

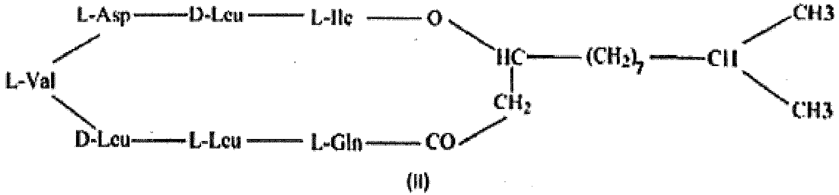

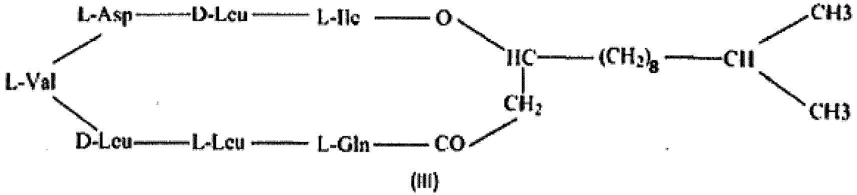

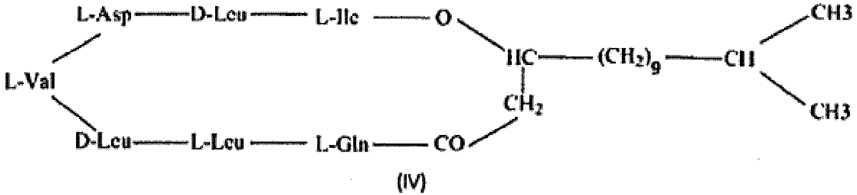

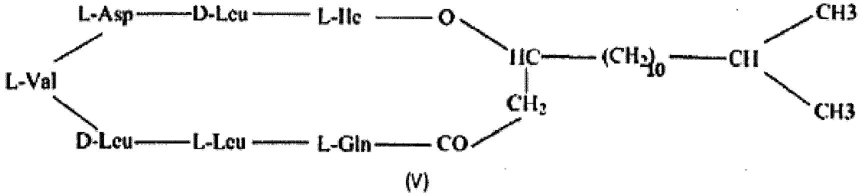

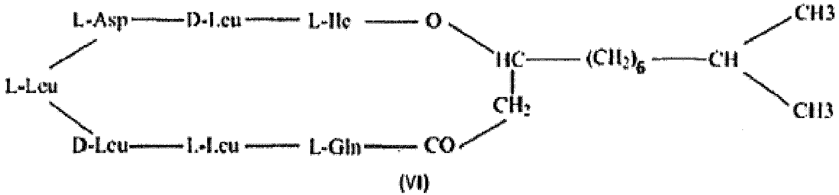

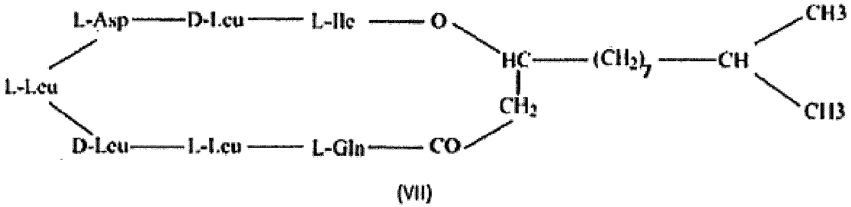

2. Procédé selon la revendication 1, dans lequel ledit procédé consiste en le renforcement de la volatilité de composés d'arôme ou la réduction de la volatilité de composés de mauvais arôme.

3. Procédé selon la revendication 2, dans lequel lesdits composés d'arôme sont l'une ou plusieurs parmi des esters, des alcools et des aldéhydes, et lesdits composés de mauvais arôme sont des composés phénoliques.

4. Procédé pour la production de baijiu, comprenant l'ajout de lichenysine jusqu'à une teneur totale de 500-1500 µg/l,
ladite lichenysine étant l'une ou plusieurs des sept homologues (fraction (I) à fraction (VII)) :

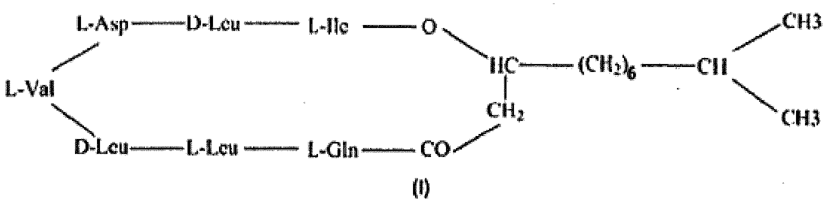

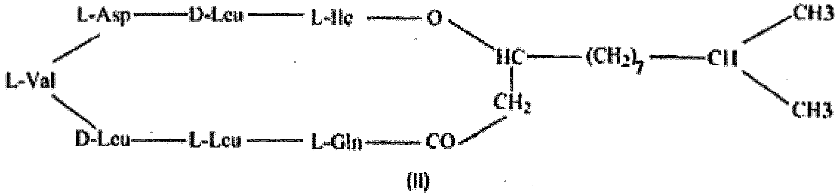

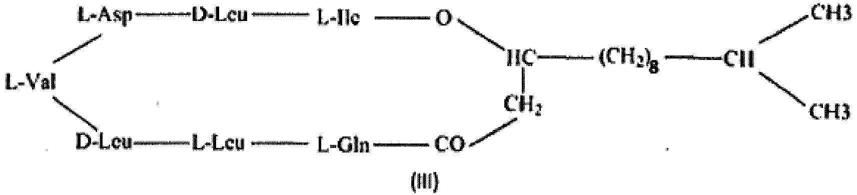

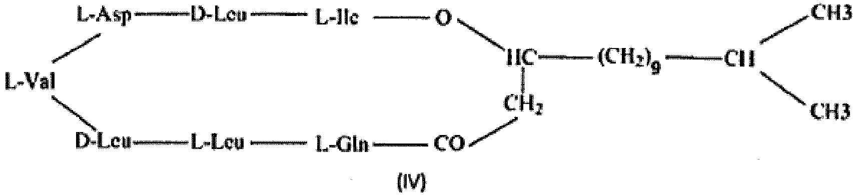

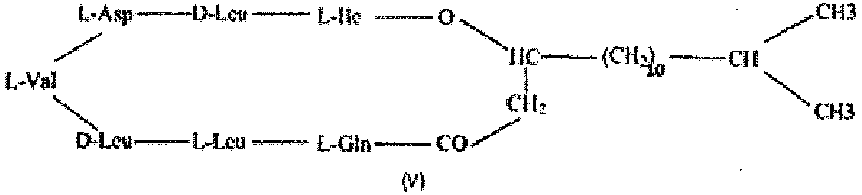

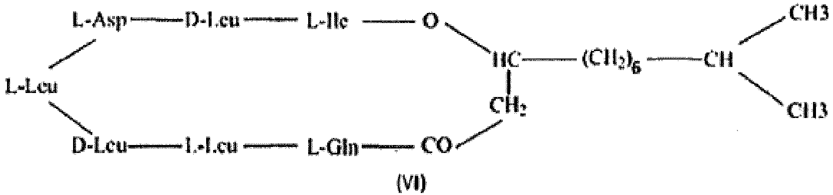

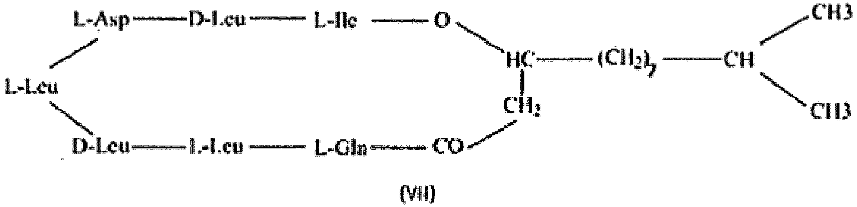

5. Procédé selon la revendication 4, dans lequel ladite lichenysine est préparée par séparation et purification à partir de baijiu.

6. Procédé selon la revendication 5, dans lequel le baijiu est élué par une colonne SPE C18 et purifié davantage par chromatographie préparative pour séparer la lichenysine.

7. Procédé selon la revendication 6, dans lequel la séparation chromato-graphique est effectuée par une colonne à phase inverse Xbridge Prep C18 (250 mm x 19 mm, 10 µm), la détection est choisie à une longueur d'onde de 210 nm, une solution méthanolique contenant 0,1 % d'acide formique est la phase mobile A, et du méthanol est la phase mobile B, le programme de séparation étant : 0 à 10 min : 40 % B à 25 % B; 10 à 50 min : 25 % B à 5 % B; 50 à 55 min : 5 % B à 0 % B.

8. Procédé selon la revendication 4, dans lequel ladite lichenysine dans le baijiu est quantifié par chromatographie liquide à ultra-haute performance (UPLC) avec spectrométrie de masse.

9. Procédé selon la revendication 8, dans lequel
les paramètres de l'UPLC sont comme suit : la colonne est une colonne UPLC™ BEH C₁₈ (100 mm x 2,1 mm ID, 1,7 µm), la température de la colonne est 30 °C, le volume d'injection est 2 µl, le débit était 0,3 ml/min, une solution méthanolique contenant 0,1 % d'acide formique est la phase mobile A, et du méthanol est la phase mobile B, et le programme d'élution est : 0 à 0,1 min : 15 % B, 0,1 à 10 min : 0 % B, 10 à 11 min : 15 % B, et
les paramètres du détecteur de masse (MSD) sont comme suit : mode ions positifs, pression d'air de pulvérisation : 30 psi; tension de séparation : 3,5kV; tension induite par collision : 20 V; gaz pour séchage : N₂; température pour séchage : 100°C; plage de balayage d'ions : 50-1500 m/z.

10. Composition, contenant
a) de la lichenysine, et
b) une boisson alcoolique,
la teneur totale de la lichenysine étant 500-1500 µg/l, et
ladite lichenysine étant l'une ou plusieurs des sept homologues (fraction (I) à fraction (VII)) :

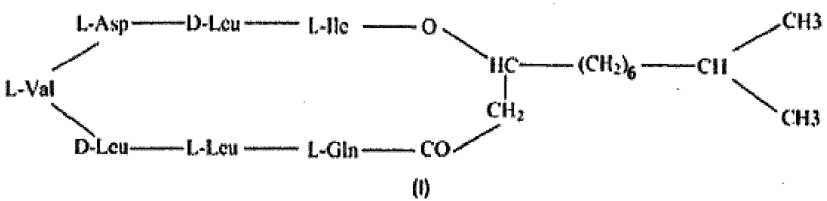

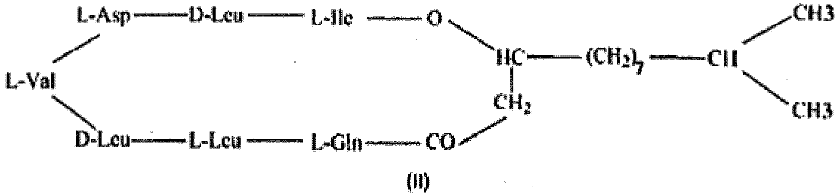

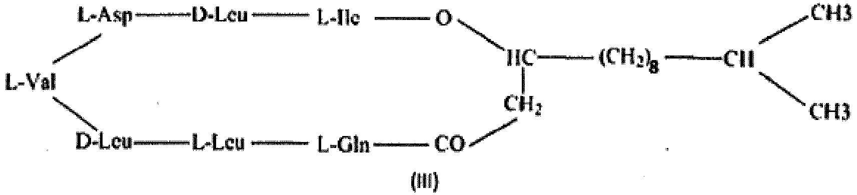

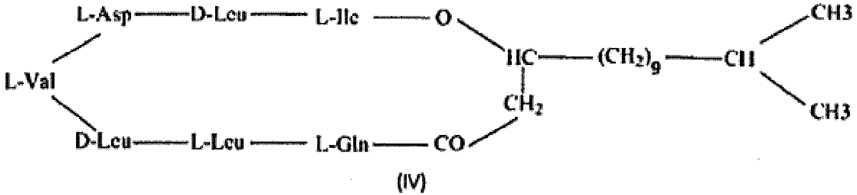

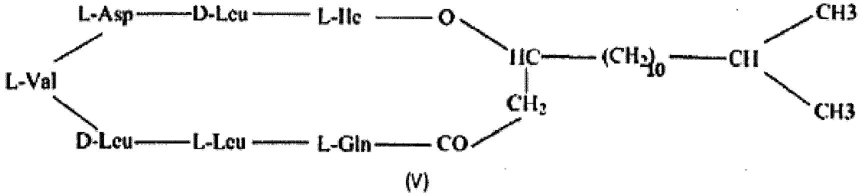

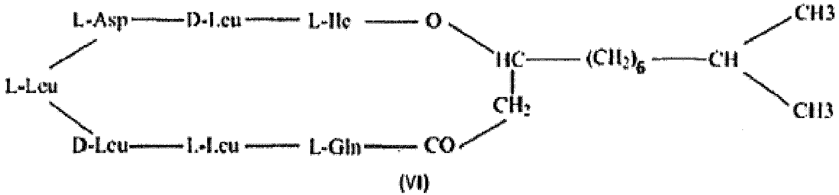

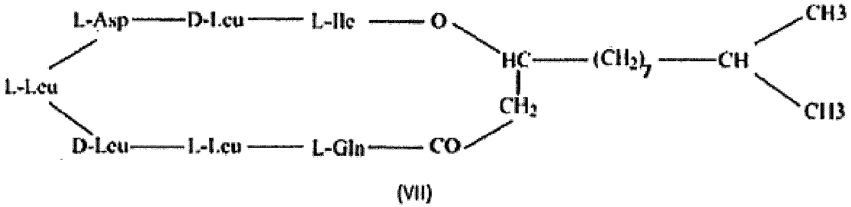

11. Composition selon la revendication 10, ladite composition étant un aliment.

12. Composition selon la revendication 11, ledit aliment étant une boisson.
